# EUROPEAN PATENT APPLICATION

(11) **EP 3 518 405 A1**
(43) Date of publication of application: **31.07.2019**
(21) Application number: 18154184.8
(22) Date of filing: 30.01.2018
(51) Int. Cl.: H02M 1/44, H02M 3/156, H02M 1/00

(54) **METHOD FOR OPERATING A VOLTAGE STEP-UP CONVERTER, VOLTAGE STEP-UP CONVERTER AND SWITCHING CONTROLLER FOR A VOLTAGE STEP-UP CONVERTER**

(71) Applicant: Vestel Elektronik Sanayi ve Ticaret A.S., 45030 Manisa (TR)
(72) Inventor: BILGIN, Mert Serdar, 45030 Manisa (TR); SAGLAM, Üstün, 45030 Manisa (TR); ERDINÇ, Cihan, 45030 Manisa (TR)
(74) Representative: Thomas, Michael Andrew

(57) **Abstract**

There is provided a method for controlling a voltage step-up converter (5), the converter (5) comprising a switch (20), controllable to open and to close at a selected switching frequency, an inductor (15), and a capacitor (30) linked to the inductor (15) via a diode (25) and connected in parallel with an output (35) of the converter (5). The method comprises detecting (40) a voltage across the inductor (15) and adjusting the switching frequency of the switch (20) according to the detected voltage. In this way, the operating mode of the converter (5) may be controlled, in particular to ensure that the converter (5) operates in a discontinuous current mode. There is also provided a voltage step-up converter (5) having a switching controller configured to implement the method, and a switching controller configured to implement the method.

## Description

### Technical Field

The present disclosure relates to a method for operating a voltage step-up converter, to a voltage step-up converter and to a switching controller for a voltage step-up converter.

### Background

Electronic devices such as televisions are provided with a power source configured to supply power to the device at one or more different voltages. For example, televisions having a light emitting diode (LED) backlight unit require different supply voltages according to a selected mode of operation of the television. For example, in a so-called 'dynamic' screen mode, the brightness of the LED backlight is increased, requiring a higher supply voltage when operating in that mode.

It is conventional, for televisions having LED backlight units, to provide a voltage step-up converter or 'boost converter' circuit between a power supply of the device and the LED backlight unit, to enable a controllable increase in supply voltage to be generated when required. Conventional boost converter circuits may operate in a continuous current mode (CCM) or a discontinuous current mode (DCM), generally according to the power level the boost converter is required to supply to a load. For example, a medium power level may be supplied when operating in DCM. However, if the LEDs are required to be driven to higher brightness levels, the conventional boost converter may begin to operate in CCM.

### Summary

According to a first aspect disclosed herein, there is provided method for controlling a voltage step-up converter, the converter comprising a switch, controllable to open and to close at a selected switching frequency, an inductor, and a capacitor linked to the inductor via a diode and connected in parallel with an output of the converter, the method comprising:
detecting a voltage across the inductor;
adjusting the switching frequency of the switch according to the detected voltage thereby to control an operating mode of the converter.

Voltage step-up converters of this type may operate in a continuous current mode (CCM) or in a discontinuous current mode (DCM), generally according to the power level the converter is required to supply to a load. One disadvantage of operating in CCM is greater emission of electromagnetic interference and so reduced electromagnetic compatibility (EMC) performance. Operation only in DCM is therefore desirable. This is facilitated in examples described herein.

In an example, the method comprises:
reducing the switching frequency of the switch if the detected voltage level remains greater than zero for one or more switching cycles.

In this way, operation of the converter in DCM may be maintained, or operation in DCM may be restored if the converter has begun to operate in CCM.

In an example of the method, detecting the voltage across the inductor comprises detecting a difference between a voltage at one end of the inductor and a voltage at the other end of the inductor.

According to a second aspect disclosed herein, there is provided a voltage step-up converter, comprising:
a switch;
an inductor;
a capacitor linked to the inductor via a diode and connected in parallel with an output of the converter;
a switching controller configured to control the times of opening and closing the switch and the switching frequency of the switch; and
a voltage detector connected to the inductor to detect a voltage across the inductor and to output an indication of a detected voltage to the switching controller,
wherein the switching controller is configured to adjust the switching frequency of the switch according to a received indication from the voltage detector, thereby to control an operating mode of the converter.

In an example, the voltage step-up converter is operable in a continuous current mode (CCM) or a discontinuous current mode (DCM), and the switching controller is configured to reduce the switching frequency of the switch if the received indication shows that the voltage detected across the inductor remains greater than zero for one or more switching cycles of the switch, thereby to maintain, or to restore to, operation of the converter in DCM.

In an example, the voltage detector comprises an arrangement of amplifiers configured to sense a difference between a voltage at one end of the inductor and a voltage at the other end of the inductor.

According to a third aspect disclosed herein, there is provided switching controller for controlling a voltage step-up converter, the converter comprising a switch, controllable to open and to close at a selected switching frequency, an inductor, and a capacitor linked to the inductor via a diode and connected in parallel with an output of the converter, the switching controller comprising an input for receiving an indication of a voltage detected across the inductor of a converter and being configured to adjust the switching frequency of the switch according to the received indication, thereby to control an operating mode of the converter.

In an example, the switching controller is configured to reduce the switching frequency of the switch if the received indication shows that the voltage detected across the inductor remains greater than zero for one or more switching cycles of the switch, thereby to maintain, or to restore to, operation of the converter in a discontinuous current mode (DCM).

### Brief Description of the Drawings

To assist understanding of the present disclosure and to show how embodiments may be put into effect, reference is made by way of example to the accompanying drawings in which:
Figure 1 shows schematically a circuit diagram of an example of a conventional boost converter circuit;
Figure 2 shows graphs of current and voltage associated with an inductor of the conventional boost converter circuit when operating in DCM and CCM;
Figure 3 shows schematically a circuit diagram of an example voltage detector circuit for detecting a voltage across the inductor of a boost converter according to the present disclosure;
Figure 4 shows a comparator as may be used to convert an output of the detector circuit of Figure 3; and
Figure 5 is a flow diagram showing a process as may be implemented for example by a switching controller of a boost converter according to the present disclosure.

### Detailed Description

Conventional boost converter circuits, as may be used for example to supply power at selected voltages to LED backlight units of televisions or other display devices, may operate in a continuous current mode (CCM) or a discontinuous current mode (DCM), generally according to the power level the boost converter is required to supply to a load. For example, a medium power level may be supplied when operating in DCM. However, if the LEDs of the backlight unit are required to be driven to higher brightness levels, the conventional boost converter may begin to operate in CCM. Operation in CCM has the disadvantages of greater emission of electromagnetic interference and so reduced EMC performance, increased power consumption, increased switching losses and increased temperature of switching devices.

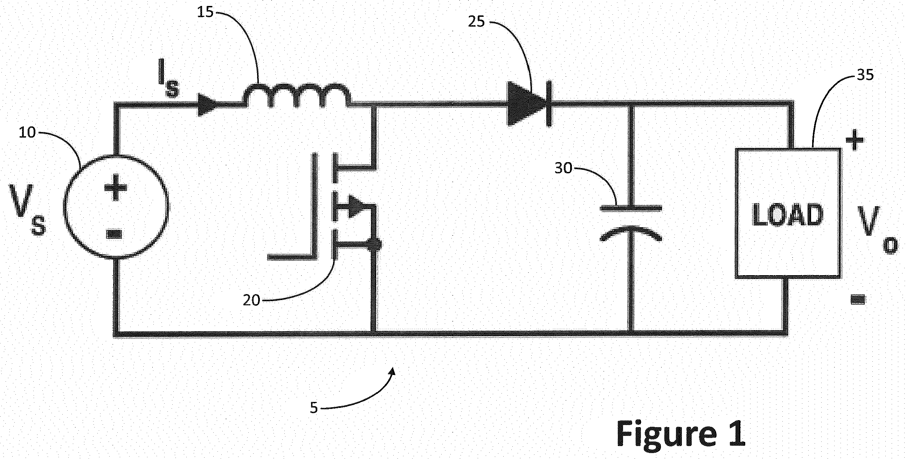

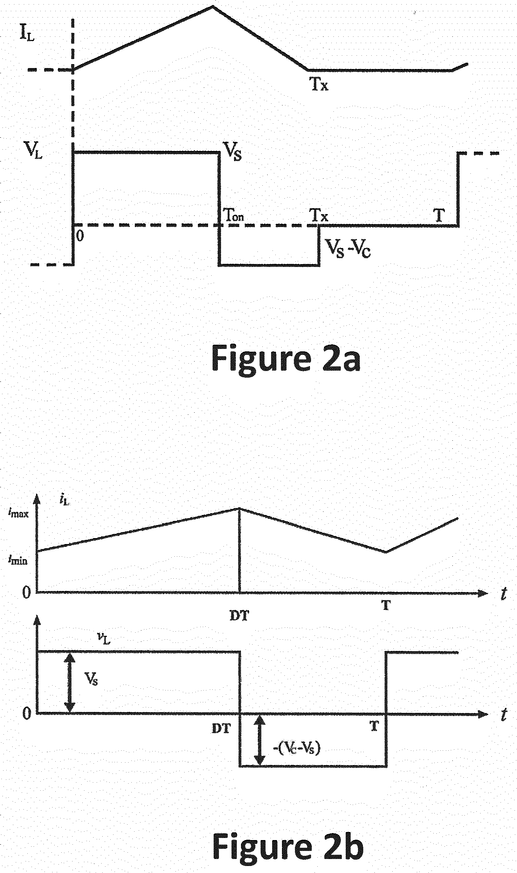

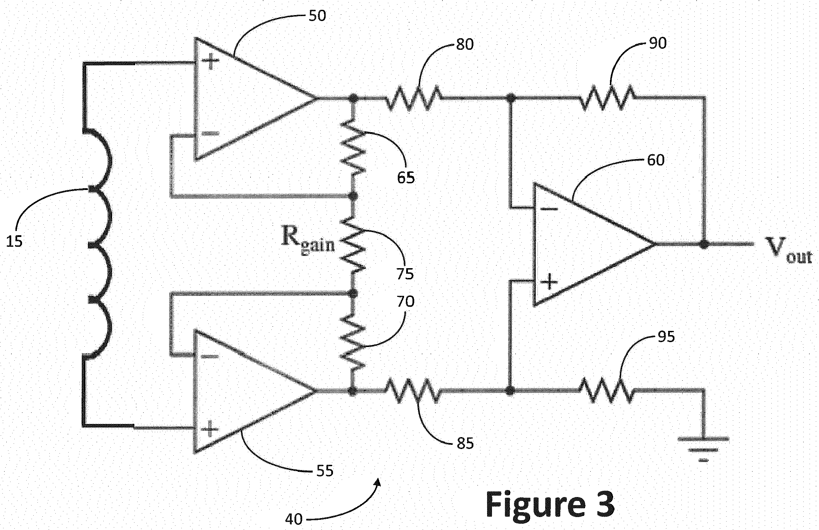

A simple and conventional boost converter circuit as may be inserted between a power supply and an LED backlight unit of a television, or which may be applied in any application where a DC-DC converter is required, will firstly be described with reference to Figure 1 and Figure 2. An example of a boost converter and associated method according to the present disclosure will then be described with reference to Figures 3, 4 and 5 for controlling the operating modes of the boost converter.

Referring initially to Figure 1, a circuit diagram of a simple and conventional boost converter 5 is shown. The boost converter 5 may be connected to receive power from a power supply 10 supplying a direct current (DC) Iₛ at a supply voltage Vₛ. The supplied current is passed through an inductor 15 to a semiconductor switch 20, for example a Metal Oxide Silicon Field-Effect Transistor (MOSFET) as shown in Figure 1, whose on-off states and switching frequency are controlled by a switching controller (not shown in Figure 1). Other types of switching transistor as would be known to a person of ordinary skill in the relevant art may be used as the switch 20, taking account of the power levels that need to be handled by the boost converter 5 and the switching frequencies required.

When the switch 20 is closed, an increasing current flows through the inductor 15 and the switch 20, storing energy which, when the switch is opened, is transferred through a fly-back diode 25 to charge a capacitor 30 and to supply a connected load 35. The capacitor 30 is connected in parallel with the connected load 35.

Referring additionally to Figure 2, graphs are provided showing examples of current and voltage profiles expected during a single switching cycle of duration T, as may be observed during the different modes of operation of the boost converter 5. In particular, referring to Figure 2a, when operating in DCM, when the switching controller closes the switch 20, the current I_{L} flowing through the inductor 15 increases at a constant rate, causing a constant voltage V_{L}, equal to the supply voltage Vₛ, to appear across the inductor 15. After a period Tₒₙ from the beginning of the cycle, the switching controller opens the switch 20, causing a steadily decreasing inductor current I_{L} to pass from the inductor 15 through the fly-back diode 25 to the capacitor 30, so transferring energy accumulated in the inductor 15 when the switch 20 was closed to charge the capacitor 30. As this happens, the voltage V_{L} across the inductor reverses polarity temporarily, boosting the voltage V_{c} across the capacitor 30 to be greater than the supply voltage Vₛ, thereby supplying the increased voltage Vₒ = V_{c} to the load 35.

When the load 35 is drawing a relatively low level of power from the boost converter 5, the inductor 15 transfers all its stored energy to the capacitor 30 and to the load 35 before the end of the switching cycle, by a time Tₓ < T. At this time, both the inductor current I_{L} and the voltage V_{L} across the inductor 15 fall to zero and remain at zero for the remainder of the switching cycle period T until the switching controller next closes the switch 20.

The relationship between the output voltage Vₒ and the supply voltage Vₛ when operating in DCM depends upon: the switching cycle period T; the proportion of the switching cycle period T during which the switch 20 is closed; the inductance of the inductor 15; the resistance of the load; and the output current being supplied to the load 35.

Referring to Figure 2b, when operating in CCM, the current I_{L} flowing through the inductor 15 never falls to zero, varying only between a minimum level iₘᵢₙ and a maximum level iₘₐₓ. By the time the switching controller opens the switch 20, at a time DT, the current I_{L} flowing through the inductor has reached the maximum value iₘₐₓ, having climbed steadily during the period DT, inducing a voltage V_{L} across the inductor 15 proportional to that rate of climbing. At the time DT, the switching controller opens the switch 20 and the inductor current I_{L} flows through the fly-back diode 25 to charge the capacitor 30 and supply the load 35. However, the inductor 15 does not complete its discharge of stored energy into the capacitor 30 before the end of the switching cycle, at time T, when the switch 20 is next closed. There is no period of zero current I_{L} through the inductor 15 or zero voltage V_{L} across the inductor 15.

When operating in CCM, the output voltage Vₒ is related to the supply voltage Vₛ more simply, depending only upon the proportion of a switching cycle period T during which (DT) the switch 20 is closed, the voltage difference increasing with an increasing proportion of switch-closed time.

It is desirable, for example for the reason that electromagnetic compatibility (EMC) performance is improved, to be able to control the operating mode of a boost converter 5, for example to ensure that it continues to supply a required output voltage while operating only in DCM. To achieve this, a boost converter according to the present disclosure is provided with a detector circuit to detect the onset of CCM operation, and a switching controller configured to vary the switching frequency of the switch 20, according to an output of the detector circuit, to ensure that the boost converter 5 continues to operate in DCM. A detector circuit for detecting the onset of CCM operation will now be described with reference to Figure 3.

Referring to Figure 3, a detector circuit diagram is shown of an example detector 40 for monitoring voltages across an inductor, for example the inductor 15 of the boost converter 5. As described above, if the boost converter 5 begins to operate in CCM, there will be a detectable voltage across the inductor 15 for the whole period T of a switching cycle, proportional to the rate of change dI_{L}/dt of the current I_{L} through the inductor 15. If the boost converter 5 is operating in DCM, then the voltage across the inductor 15 will drop to zero for a proportion of each switching cycle as the inductor discharges all of its accumulated energy into the capacitor 30 and the load 35. An arrangement of operational amplifiers 50, 55, 60 and resistors 65, 70, 75, 80, 85, 90, 95 are connected across the inductor 15 of the boost converter 5 to provide an output Vₒᵤₜ indicative of a difference between the voltage at one end of the inductor 15 and a voltage at the other end. The value selected for the R_{gain} resistor 75 determines the voltage gain and hence the measurement resolution of the detector circuit 40.

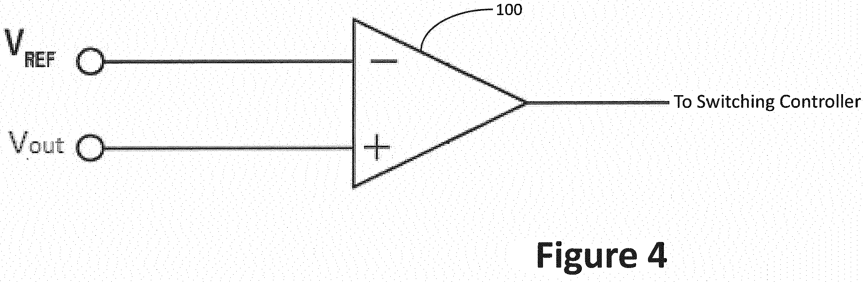

The output Vₒᵤₜ of the detector circuit 40 may be compared with a predetermined reference voltage V_{REF} retrieved from a data store, for example by inputting the reference voltage and the output of the detector circuit 40 to an operational amplifier comparator 100 as shown in Figure 4. Alternatively, the output of the detector circuit 40 may be input directly to the switching controller for interpretation by the switching controller. The reference voltage V_{REF} is set so that the comparator 100 is arranged to output, when the boost converter 5 is operating in CCM, a substantially zero value. When the boost converter 5 is operating in DCM, the comparator 100 is arranged to output a non-zero value for at least a portion of each switching cycle.

The output of the comparator 100 is passed to the switching controller of the boost converter 5. If the output of the comparator 100 remains substantially at zero for the whole of each switching cycle, over a predetermined number of switching cycles, then the switching controller is configured to decrease the switching frequency of the switch 20 until the output of the comparator 100 becomes non-zero for at least a portion of each switching cycle, indicating a return to DCM operation. If necessary, the switching controller may also vary the proportion of the switching cycle period during which the switch is closed and so maintain a required output voltage or power level.

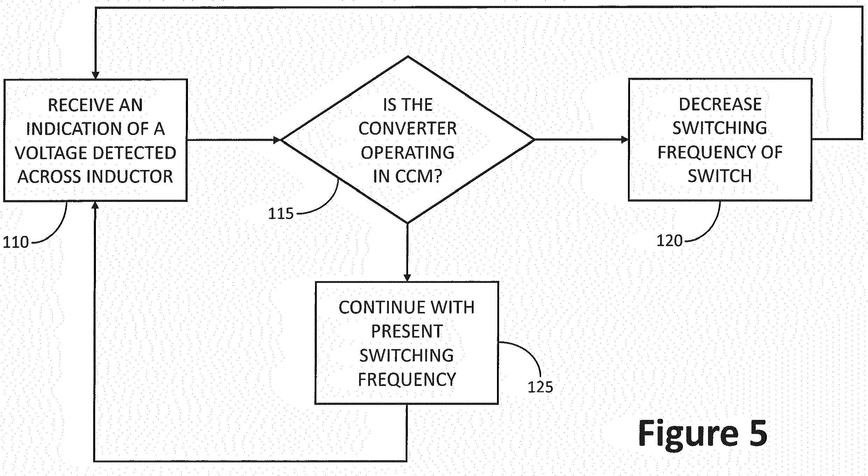

The switching controller of a boost converted according to the present disclosure may be configured to implement an additional process to control the switching of the switch 20 according to the principles described above. An example of such a process will now be described with reference to Figure 5.

Referring to Figure 5, a flow diagram of an example process is provided in which, at 110, the switching controller receives an indication of a voltage, if detected, across the inductor 15 of the boost converter 5. The indication of a detected voltage may comprise an output from the detector circuit 40 described above with reference to Figure 3 or from the comparator 100 shown in Figure 4. If, at 115, the received indication shows that the boost converter 5 is operating in CCM, that is, the indication shows that the detected voltage remains greater than zero over the whole of a switching cycle of the switch 20, then, at 120, the switching controller decreases the switching frequency of the switch 20. The process then returns to 110 to receive a new indication of a detected voltage.

If, at 115, the received indication shows that the boost converter 5 is operating in DCM, that is, the indication shows that the detected voltage drops to zero for a portion of a switching cycle of the switch 20, then the switching controller maintains a current switching frequency of the switch 20 and the process returns to 110 to receive a new indication of a detected voltage.

It will be understood that the techniques described above in the context of a boost converter for an LED backlight unit of a televison may be applied to any DC-DC power converter able to operate in CCM or DCM.

It will be understood that the switching controller or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory.

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A method for controlling a voltage step-up converter (5), the converter (5) comprising a switch (20), controllable to open and to close at a selected switching frequency, an inductor (15), and a capacitor (30) linked to the inductor (15) via a diode (25) and connected in parallel with an output (35) of the converter (5), the method comprising:
detecting (40) a voltage across the inductor (15);
adjusting the switching frequency of the switch (20) according to the detected voltage thereby to control an operating mode of the converter (5).

2. The method according to claim 1, comprising:
reducing the switching frequency of the switch (20) if the detected voltage level remains greater than zero for one or more switching cycles.

3. The method according to claim 1 or claim 2, wherein detecting the voltage across the inductor (15) comprises detecting (40) a difference between a voltage at one end of the inductor (15) and a voltage at the other end of the inductor (15).

4. A voltage step-up converter (5), comprising:
a switch (20);
an inductor (15);
a capacitor (30) linked to the inductor (15) via a diode (25) and connected in parallel with an output (35) of the converter (5);
a switching controller configured to control the times of opening and closing the switch (20) and the switching frequency of the switch (20); and
a voltage detector (40) connected to the inductor (15) to detect a voltage across the inductor (15) and to output an indication of a detected voltage to the switching controller,
wherein the switching controller is configured to adjust the switching frequency of the switch (20) according to a received indication from the voltage detector (40), thereby to control an operating mode of the converter (5).

5. The voltage step-up converter (5) according to claim 4, operable in a continuous current mode (CCM) or a discontinuous current mode (DCM), wherein the switching controller is configured to reduce the switching frequency of the switch (20) if the received indication shows that the voltage detected (40) across the inductor (15) remains greater than zero for one or more switching cycles of the switch (20), thereby to maintain, or to restore to, operation of the converter (5) in DCM.

6. The voltage step-up converter (5) according to claim 4 or claim 5, wherein the voltage detector (40) comprises an arrangement of amplifiers (50, 55, 60) configured to sense a difference between a voltage at one end of the inductor (15) and a voltage at the other end of the inductor (15).

7. A switching controller for controlling a voltage step-up converter (5), the converter (5) comprising a switch (20), controllable to open and to close at a selected switching frequency, an inductor (15), and a capacitor (30) linked to the inductor (15) via a diode (25) and connected in parallel with an output (35) of the converter (5), the switching controller comprising an input for receiving an indication of a voltage detected (40) across the inductor (15) of a converter (5) and being configured to adjust the switching frequency of the switch (20) according to the received indication, thereby to control an operating mode of the converter (5).

8. The switching controller according to claim 7, configured to reduce the switching frequency of the switch (20) if the received indication shows that the voltage detected (40) across the inductor (15) remains greater than zero for one or more switching cycles of the switch (20), thereby to maintain, or to restore to, operation of the converter (5) in a discontinuous current mode (DCM).
